(19) Europäisches Patentamt

European Patent Office

Office européen des brevets

(11) **EP 0 561 287 B1**

(12) **EUROPEAN PATENT SPECIFICATION**

(45) Date of publication and mention
of the grant of the patent:
**29.07.1998 Bulletin 1998/31**

(51) Int Cl.⁶: **H04N 1/40**

(21) Application number: **93103982.0**

(22) Date of filing: **11.03.1993**

(54) **Density processing method**

Dichtenverarbeitungsverfahren

Procédé de traitement de densité

(84) Designated Contracting States:
**DE FR GB IT**

(30) Priority: **12.03.1992 JP 89854/92**

(43) Date of publication of application:
**22.09.1993 Bulletin 1993/38**

(60) Divisional application: **96110528.5 / 0 738 072**

(73) Proprietor: **MITA INDUSTRIAL CO., LTD.**
**Osaka 540 (JP)**

(72) Inventors:
- **Fujimoto, Masaya, Mita Industrial Co., Ltd.**
  **Osaka, 540 (JP)**
- **Yamamoto, Haruo, Mita Industrial Co., Ltd.**
  **Osaka, 540 (JP)**
- **Hayashi, Shuji, Mita Industrial Co., Ltd.**
  **Osaka, 540 (JP)**
- **Kagawa, Tetsuya, Mita Industrial Co., Ltd.**
  **Osaka, 540 (JP)**

(74) Representative: **Bohnenberger, Johannes, Dr.**
**Meissner, Bolte & Partner**
**Postfach 86 06 24**
**81633 München (DE)**

(56) References cited:
**EP-A- 0 415 722**        **US-A- 4 271 436**
**US-A- 4 805 013**

Remarks:
The file contains technical information submitted
after the application was filed and not included in this
specification

## Description

The present invention relates to a density Processing method in an image forming apparatus such as a copying machine.

The United States Patent US-A-4,805,013 discloses an image data conversion system comprising a RAM for storing a data conversion table and a CPU for calculating the data conversion table with parameters received from a ROM. Means are provided for receiving an image to be reproduced and for converting the input image on the basis of the data conversion table.

The United States Patent US-A-4,271,436 discloses a digital copying machine including a data processing and transfer system. A ROM is provided which contains addresses representing a combination of the pixel data and a correction value for the density of the image at that pixel.

In a conventional digital color copying machine, a document is first irradiated by an exposure lamp in a scanner section, and its reflected light is detected by a CCD (Charge Coupled Device) and sequentially converted into an electric signal. In this case, an image of the document is separated for each color and for each pixel by the CCD into an electric signal corresponding to the density of each Pixel. This electric signal is sent to an image processing section.

In the image processing section, an output of the CCD is digitally converted and then, the variations of the CCD, the exposure lamp and the like are corrected for each signal having colors (B (blue), G (green) and R (red)) (BGR signal) in a shading correcting section. The BGR signal is converted into a toner density signal (a YMC (yellow, magenta and cyan) signal) in a BGR-YMC converting section. In addition, a BK (black) signal is Produced from the YMC signal in a BK producing section.

Thereafter, in the YMC signal and the BK signal, the density levels of the respective colors are corrected in accordance with the characteristics of a filter and toner in a color correcting section. Furthermore, in a color converting section, processing such as color conversion of a designated color, trimming or masking is performed. In a density processing section, the level of a digital density signal sent is converted depending on a developing color, the copy density designated in an operating section, the type of document image designated in the operating section, and the like. Thereafter, the digital density signal is sent to a printing section through a variable magnification and movement processing section for performing variable magnification and movement Processing in the main scanning direction of an image, to accomplish recording on paper.

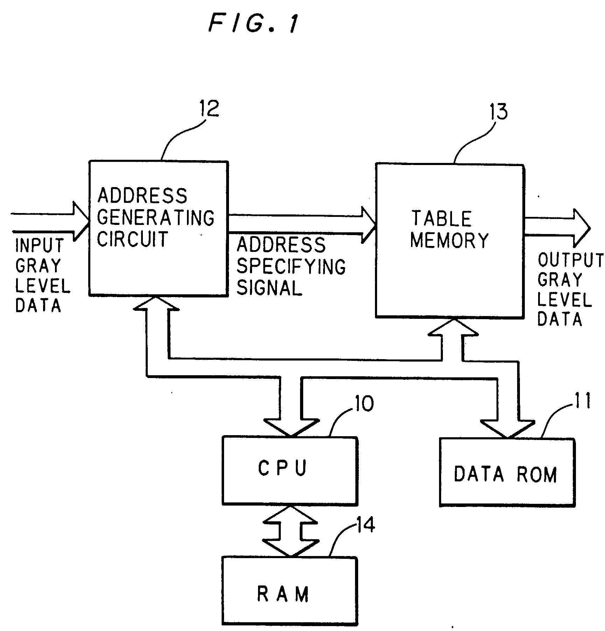

In the digital copying machine or the digital color copying machine, density processing using a dither method has been generally performed in the density processing section so as to obtain a gray scale image. A conventional digital color copying machine developed by the applicant of the present application is so adapted that data representing a gray level of a recording pixel relative to a gray level of a reading Pixel (hereinafter referred to as input-output gray level data) have been previously generated using a dither matrix having 2 x 2 pixels as one block and stored in a memory device, to find data representing a gray level of a recording pixel (hereinafter referred to as output gray level data) corresponding to data representing a gray level of a reading pixel (hereinafter referred to as input gray level data) inputted on the basis of the input gray level-output gray level data. There are 256 gray levels of the reading pixel, and there are 64 gray levels of the recording pixel. A density processing circuit in this known copying machine is shown in Fig. 1.

The density processing circuit comprises a CPU 10, a data ROM 11, a table memory 13, and an address generating circuit 12. A plurality of types of input gray level-output gray level data previously generated are stored in the data ROM 11 depending on a developing color (M, C, Y or BK), the copy density designated in an operating section, and the type of document image designated in the operating section.

The CPU 10 transfers one type of input gray level-output gray level data corresponding to the developing color, the copy density designated in the operating section, and the type of document image designated in the operating section out of the plurality of types of input gray level-output gray level data from the data ROM 11 to the table memory 13. Image data representing a gray level of a reading pixel (input gray level data) and a signal representing the position of the reading pixel (a pixel position signal) comprising a line signal HSYNC and a dot signal CLK are sent to the address generating circuit 12. The address generating circuit 12 outputs a signal for specifying an address storing output gray level data corresponding to the input gray level data and the pixel position signal sent (a pixel in the dither matrix which corresponds to the reading Pixel) out of addresses in the table memory 13. Consequently, the output gray level data stored at the specified address is outputted from the table memory 13.

In this copying machine, the number of gray levels of the reading pixel is 256, and the number of pixels constituting one block in the dither matrix is 4. Accordingly, the number of one type of input gray level-output gray level data is 256 x 4 = 1024. Such input gray level-output gray level data differ for each developing color (M, C, Y or BK), for each copy density designated in the operating section, and for each type of document image designated in the operating section. It is assumed that there are four types of developing colors, there are 15 levels of the copy density designated in the operating section, and there are three types of document images designated in the operating section, that is, a character, a photograph and a character-photograph mixture. In this case, if the data ROM 11 is a 8-bit memory. 1024 x 4 x 15 x 3 = 184320 bytes is required as the capacity of the data ROM 11. In such a copying machine, therefore, a large-capacity memory device is required to store the input output gray level data.

Therefore, the present applicant has previously proposed a method of generating input/output gray level data for each developing color (M, C, Y or BK) and for each type of document image designated in the operating section and making the adjustment of an output gray level based on the copy density designated in the operating section on the basis of the input/output gray level data generated so as to reduce the capacity of the data ROM 11. This known method includes finding an output gray level relative to an input gray level on the basis of input gray level-output gray level data corresponding to a developing color and the type of document image designated in the operating section and then, increasing or decreasing the output gray level found by a gray level corresponding to the copy density designated in the operating section, to obtain an output gray level. That is, it is a method of merely adding or subtracting an offset value to or from the output gray level found by the input/output gray level data.

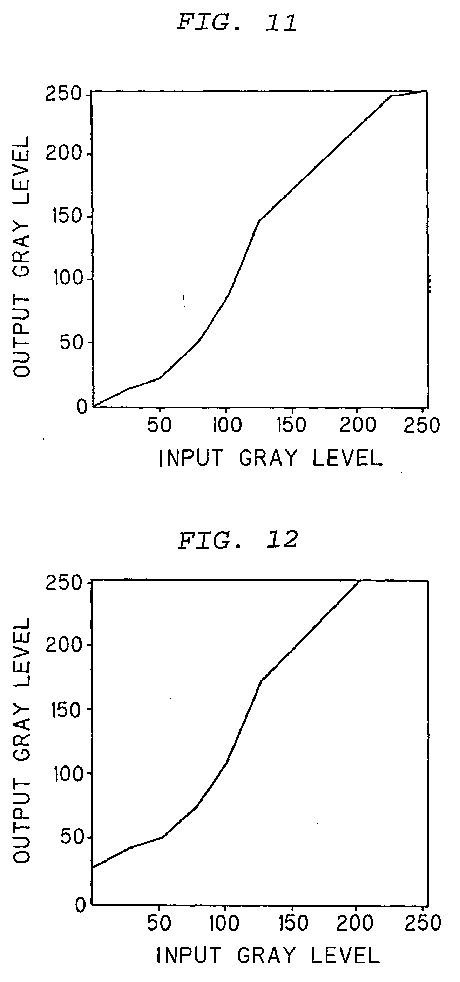

Fig. 11 shows input/output gray level data corresponding to a developing color and the type of document image designated in the operating section, and Fig. 12 shows input/output gray level data obtained by so correcting the input gray level-output gray level data shown in Fig. 11 that output gray level data is larger by a predetermined gray level by the above described method.

In the known method of merely adding or subtracting an offset value to or from an output gray level found by input gray level-output gray level data, if input gray level-output gray level characteristics obtained by the method shown in Fig. 12 are compared with the original input gray level-output gray level characteristics shown in Fig. 11, the value of an output gray level at a point on the characteristic curve is changed from the value of an output gray level at a corresponding point on the original characteristic curve. Accordingly, the relationship between the output gray level data and the density at which printing is actually done in the original input gray level-output gray level characteristics cannot be maintained. Therefore, the relationship between the input gray level data and the density at which printing is actually done is not linear. Further, by merely adding or subtracting an offset value to or from an output gray level found by input/output gray level data, the range of output gray levels is extremely decreased.

The object of the present invention is to provide a density processing method in which the capacity of a memory device for storing data representing an output gray level relative to an input gray level (hereinafter referred to as input/output gray level data) can be reduced, and the range of output gray levels is not extremely decreased and the relationship between input gray level data and the density at which printing is actually done can be made linear.

According to the present invention, a density processing method is provided as defined in claim 1.

According to the method, it is possible to reduce the capacity of the memory device for storing the input gray level-output gray level data. Moreover, the range of output gray levels is not extremely decreased and the relationship between the input gray level data and the density at which printing is actually done can be made linear, as compared with that in a method of merely adding or subtracting an offset value to or from an output gray level found by input gray level-output gray level data to obtain an output gray level corresponding to the copy density.

The foregoing object and other advantages of the present invention will become more apparent from the following detailed description of the embodiments when taken in conjunction with the accompanying drawings.

Fig. 1 is an electrical block diagram showing a conventional density processing circuit;
Fig. 2 is a schematic diagram showing four pixels in a dither matrix:
Fig. 3 is a schematic diagram showing the contents of the data ROM 11 of Fig. 1;
Fig. 4 is a schematic diagram showing the interior of the table memory 13 of Fig. 1;
Fig. 5 is a graph for explaining a basic method;
Fig. 6 is a graph showing input/output gray level characteristics in a case where the basic method is used;
Fig. 7 is a graph showing input gray level-output gray level characteristics for explaining an embodiment in accordance with the invention;
Fig. 8 is a graph showing input/output gray level characteristics obtained in the embodiment of Fig. 7;
Fig. 9 is a graph showing input/output gray level characteristics for further explaining the embodiment;
Fig. 10 is a graph showing input/output gray level characteristics obtained for Fig 8;
Fig. 11 is a graph showing a known example of the original input/output gray level characteristics;
Fig. 12 is a graph showing input/output gray level characteristics obtained by shifting the original input/output gray level characteristics shown in Fig. 11 upward.

Description is first made of general image processing in a digital color copying machine with reference to the drawings.

Fig. 1 shows a density processing circuit in a digital color copying machine.

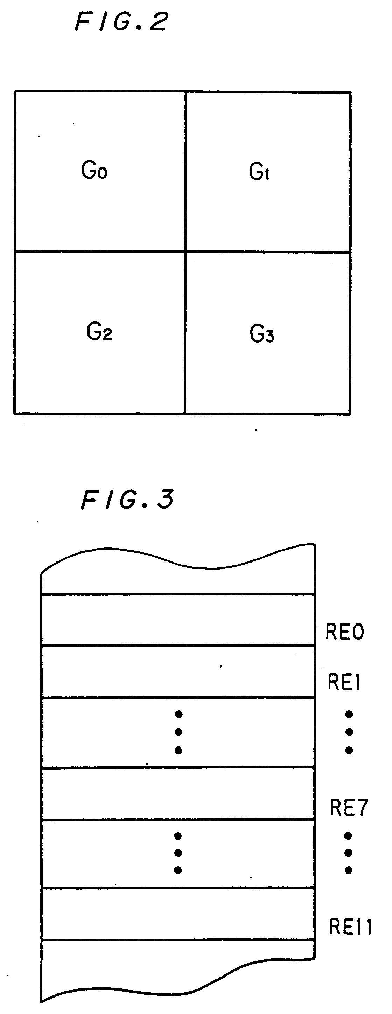

The density processing circuit comprises a CPU 10, a data ROM 11, a table memory 13, and an address generating circuit 12. The CPU 10 comprises a RAM 14 storing necessary data. A plurality of types of data representing a gray level of a recording pixel relative to a gray level of a reading pixel (hereinafter referred to as input/output gray level data) are stored in the data ROM 11 depending on a developing color (M, C, Y or BK) and the type of document image designated in an operating section. The document images are of three types, that is, a character, a photograph, and a character-photograph mixture. The input gray level-output gray level data are previously generated using a dither matrix having as one block 2 x 2 pixels $G_0$, $G_1$, $G_2$ and $G_3$ shown in Fig. 2. There are 256 gray levels of the reading Pixel, and there are 64 gray levels of the recording pixel.

Input/output gray level data corresponding to a developing color and the type of document image out of the plurality of types of input gray level-output gray level data stored in the data ROM 11 are transferred to the table memory 13 by the CPU 10. Data representing a gray level of a reading pixel (hereinafter referred to as input gray level data) and a signal representing the position of the reading pixel (hereinafter referred to as a pixel position signal) comprising a line signal HSYNC and a dot signal CLK are sent to the address generating circuit 12.

The address generating circuit 12 outputs a 10-bit signal for specifying an address (hereinafter referred to as an address specifying signal) expressed by binary numbers corresponding to the input gray level data and the pixel position signal (a pixel in the dither matrix which corresponds to the reading pixel). Lower eight bits of the address specifying signal correspond to the input gray levels 0 to 255, and upper two bits thereof correspond to each of the pixels $G_0$, $G_1$, $G_2$ and $G_3$ in the dither matrix. Values expressed by the upper two bits of the address specifying signal which correspond to each of the pixels $G_0$, $G_1$, $G_2$ and $G_3$ are "00", "01", "10" and "11". When the address specifying signal is outputted from the address generating circuit 12, data stored in a specified address in the table memory 13 is outputted as data representing an output gray level (hereinafter referred to as output gray level data) from the table memory 13.

Table 1 shows one example of the input/output gray level data. In Table 1, base addresses Oadr 0 to 255 denote specified addresses used as the basis corresponding to input gray level data 0 to 255, and the base addresses Oadr 0 to 255 have a one-to-one correspondence with the input gray level data 0 to 255. In addition, a total gray level indicates the total of output gray levels corresponding to the four pixels in the dither matrix relative to an input gray level.

TABLE 1

| INPUT GRAY LEVEL DATA | BASE ADDRESS (Oadr) | OUTPUT GRAY LEVEL DATA | | | | TOTAL GRAY LEVEL |
|---|---|---|---|---|---|---|
| | | $G_0$ | $G_1$ | $G_2$ | $G_3$ | |
| 0 | 0 | 0 | 0 | 0 | 0 | 0 |
| 1 | 1 | 1 | 0 | 0 | 0 | 1 |
| 2 | 2 | 2 | 0 | 0 | 0 | 2 |
| ⋮ | ⋮ | ⋮ | ⋮ | ⋮ | ⋮ | ⋮ |
| 64 | 64 | 64 | 0 | 0 | 0 | 64 |
| 65 | 65 | 64 | 1 | 0 | 0 | 65 |
| ⋮ | ⋮ | ⋮ | ⋮ | ⋮ | ⋮ | ⋮ |
| 129 | 129 | 64 | 64 | 0 | 1 | 129 |
| ⋮ | ⋮ | ⋮ | ⋮ | ⋮ | ⋮ | ⋮ |
| 255 | 255 | 64 | 64 | 63 | 64 | 255 |

Fig. 3 shows the contents of the data ROM 11.

In this copying machine, input gray level-output gray level data are previously generated for four types of colors (M, C, K, and BK) and for three types of document images, that is, a character, a photograph and a character-photograph mixture designated in the operating section. Specifically, 12 types of input gray level-output data are respectively stored in areas $RE_0$ to $RE_{11}$ in the data ROM 11. In this example, the data ROM 11 is a 8-bit memory. Accordingly, the number of bytes composing each of the areas $RE_0$ to $RE_{11}$ is (the number of input gray levels) x (the number of pixels in the dither matrix), that is, 1024. Consequently, the number of bytes composing all the 12 areas is 1024 x 12 = 12288.

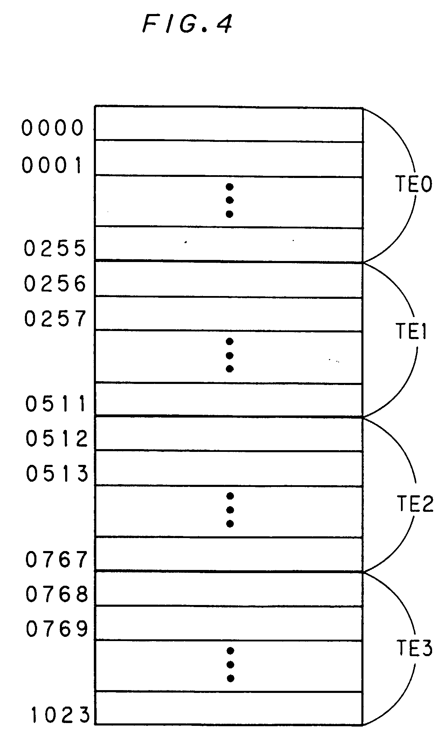

Fig. 4 shows the interior of the table memory 13.

The table memory 13 is a 8-bit memory, and comprises an area $TE_0$ (addresses 0 to 255) for storing input/output gray level data (256 gray levels) with respect to the pixel $G_0$ in the dither matrix, an area $TE_1$ (addresses 256 to 511) for storing input gray level-output gray level data with respect to the pixel $G_1$, an area $TE_2$ (addresses 512 to 767) for storing input gray level-output gray level data with respect to the pixel $G_2$, and an area $TE_3$ (addresses 768 to 1023) for storing input gray level-output gray level data with respect to the pixel $G_3$.

The density processing circuit in the copying machine outputs output gray level data corresponding to the copy density designated in the operating section on the basis of input/output gray level data stored in the data ROM 11.

For illustration, a basic method will be described first. This basic method is not an embodiment of the present invention.

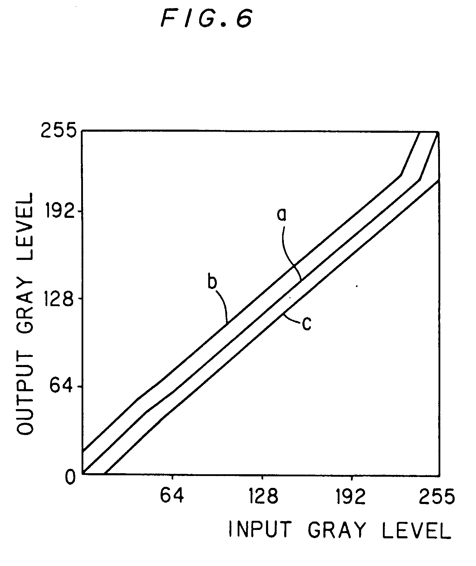

As shown in Fig 6, the basic method is one for shifting, in a case where input gray levels are used to enter the axis of abscissa, output gray levels are used to enter the axis of ordinate, and the original input/output gray level characteristics (where output gray levels denote total output gray levels) are indicated by a graph line a, the graph line a to the left or right depending on the designated copy density, to convert the original input/output gray level characteristics into characteristics corresponding to the designated copy density (a graph line b or c).

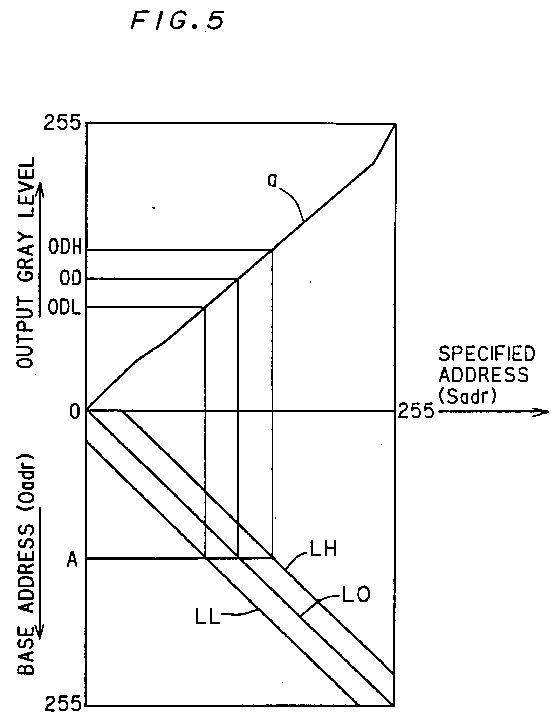

The basic method is one for converting specified addresses composed of eight bits corresponding to input gray level data 0 to 255 in the address generating circuit 12. Specifically, the 8-bit specified addresses used as the basis (base addresses Oadr) corresponding to the input gray level data 0 to 255 are convertcd. A specified address composed of upper two bits corresponding to each of the pixels $G_0$, $G_1$, $G_2$ and $G_3$ in the dither matrix is not converted. Fig. 5 shows the relationship between the base addresses Oadr (the input gray level data) 0 to 255 and 8-bit specified addresses obtained by the conversion Sadr and the relationship between the specified addresses Sadr and output gray level data (total gray level data).

The graph line a is a graph indicating the original input gray level-output gray level data in a case where input gray levels are used to enter the axis of abscissa and output gray levels are used to enter the axis of ordinate. A straight line LO is a graph indicating the relationship between the base addresses Oadr and the specified addresses Sadr in a case where a one-to-one correspondence exists between the base addresses Oadr and the specified addresses Sadr. When the designated copy density is higher than the reference copy density, the relationship between the base addresses Oadr and the specified addresses Sadr is converted into the relationship indicated by, for example, a straight line LH. On the other hand, when the designated copy density is lower than the reference copy density, the relationship between the base addresses Oadr and the specified addresses Sadr is converted into the relationship indicated by, for example, a straight line LL.

Output gray level data corresponding to Point A of the base addresses Oadr (the input gray level data) is OD when the relationship between the base addresses Oadr and the specified addresses Sadr is indicated by the straight line LO, is ODH (> OD) when the relationship between the base addresses Oadr and the specified addresses Sadr is indicated by the straight line LH, and is ODL (< OD) when the relationship between the base addresses Oadr and the specified addresses Sadr is indicated by the straight line LL.

A formula for address conversion is given by the following expression (1):

$$Sadr = Oadr + Sft \tag{1}$$

The value of Sft is changed depending on the copy density designated in the operating section, to obtain an output gray level corresponding to the designated copy density. The value of Sft corresponding to the designated copy density is previously determined, and is stored in the data ROM 11 or another ROM (not shown). Sft is so determined, if the designated copy density is higher than the reference copy density, that it takes a positive value and that the higher the designated copy density is, the larger its absolute value is. On the other hand, Sft is so determined, if the designated copy density is lower than the reference copy density, that it takes a negative value and that the lower the designated copy density is, the larger its absolute value is.

It is assumed that one type of input gray level-output gray level data corresponding to a developing color and the type of document image out of a plurality of types of input gray level-output gray level data stored in the data ROM 11 are transferred to the table memory 13 from the data ROM 11 by the CPU 10, and the value of Sft corresponding to the designated copy density is sent to the address generating circuit 12. When input gray level data and an pixel position signal are sent to the address generating circuit 12, a specified address Sadr is found by the foregoing expression (1). Two bits corresponding to the pixel position signal are added to the specified address Sadr on the side of its most significant digit, to generate an address specifying signal. The address specifying signal is outputted from the address generating circuit 12.

However, specified addresses obtained by the conversion Sadr corresponding to input gray level data, whose values are larger than the maximum value 255 of the base addresses Oadr by the foregoing expression (1), are fixed to the maximum value 255. On the other hand, specified addresses obtained by the conversion Sadr corresponding to input gray level data, whose values are smaller than the minimum value 0 of the base addresses Oadr, are fixed to the minimum value 0. When the address specifying signal is outputted from the address generating circuit 12. data at a corresponding address in the table memory 13 is outputted as output gray level data.

For example, if the designated copy density is higher than the reference copy density and the value of Sft corresponding to the designated copy density is + 15, the specified addresses Sadr corresponding to the base addresses Oadr (the input gray level data) 0 to 255 become 15 to 270 by the foregoing expression (1). The specified addresses Sadr corresponding to the input gray level data 241 to 255, whose values are larger than 255, are set to the maximum value 255 of the base addresses Oadr.

The relationship between the input gray level data and the output gray level data in a case where the value of Sft corresponding to the designated copy density is + 15 is indicated by the graph line $\underline{b}$ in Fig. 6. Specifically, the graph line $\underline{b}$ is a graph line obtained by shifting the graph line $\underline{a}$ indicating the original input gray level-output gray level data by a predetermined amount to the left.

On the other hand, if the designated copy density is lower than the reference copy density and the value of Sft corresponding to the designated copy density is - 15, the specified addresses Sadr corresponding to the base addresses Oadr (the input gray level data) 0 to 255 become - 15 to 240 by the foregoing expression (1). The specified addresses Sadr corresponding to the input gray level data 0 to 14, whose values are smaller than 0, are set to the minimum value 0 of the base addresses Oadr.

The relationship between the input gray level data and the output gray level data in a case where the value of Sft corresponding to the designated copy density is - 15 is indicated by the graph line $\underline{c}$ in Fig. 6. Specifically, the graph line $\underline{c}$ is a graph line obtained by shifting the graph line $\underline{a}$ indicating the original input gray level-output gray level data by a predetermined amount to the right.

Description is now made of an embodiment of the present method by taking as an example a case where the designated copy density is lower than the reference copy density.

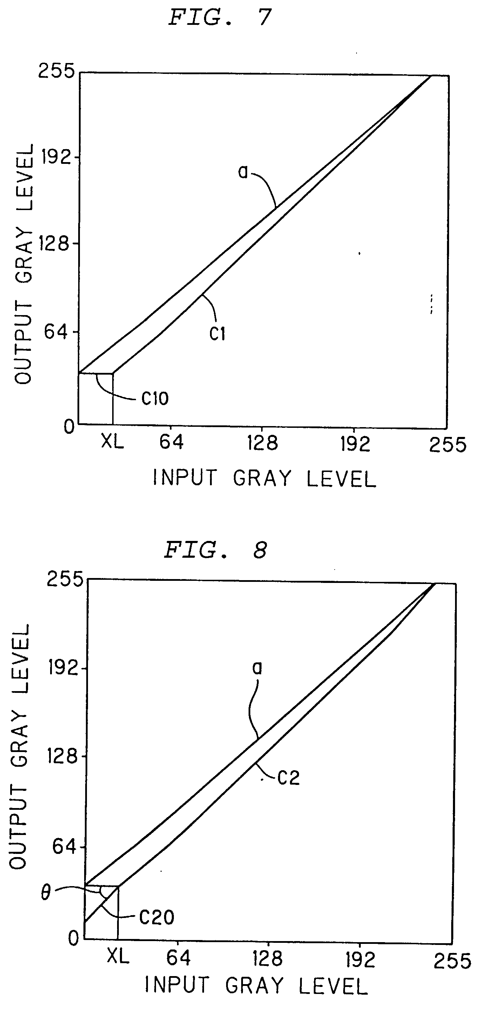

Figs. 7 and 8 show input/output gray level characteristics in a case where input gray levels are used to enter the axis of abscissa and output gray levels are used to enter the axis of ordinate. A graph line $\underline{a}$ shown in Figs. 7 and 8 indicates the original input/output gray level characteristics. When the designated copy density is lower than the reference copy density, the original input/output gray level characteristics are converted into characteristics obtained by rotating the graph line $\underline{a}$ indicating the original input gray level-output gray level characteristics through a predetermined angle in a counterclockwise direction around a point, which corresponds to the highest output gray level, on the graph line $\underline{a}$, as indicated by a graph line c1 in Fig. 7. The angle of rotation is set to a value corresponding to the designated copy density. If the graph line $\underline{a}$ indicating the original input gray level-output gray level characteristics is merely rotated in a counterclockwise direction, no input gray level-output gray level data exist in a portion at low input gray levels. Accordingly, input gray level-output gray level data in the portion are indicated by a graph line c20 in Fig. 8 which is a straight line having a gradient θ of, for example, 45°. The input gray levels are thus converted on the basis of input/output gray level data c2 found.

Description is made of a case where the designated copy density is lower than the reference copy density using the idea of converting specified addresses.

The characteristics c1 obtained by rotating the graph line $\underline{a}$ indicating the original input gray level-output gray level characteristics shown in Fig. 7 through a predetermined angle in a counterclockwise direction are obtained by converting base addresses Oadr by the expression

$$Sadr = 255 - \{Gain\ (255 - Oadr) + Offset\} \tag{2}$$

In this case, the value of Offset is always 0. Gain is so determined, if the designated copy density is higher than the reference copy density, that it takes a value smaller than 1 and that the higher the designated copy density is, the smaller the value is. On the other hand, Gain is so determined, if the designated copy density is lower than the reference copy-density, that it takes a value larger than 1 and that the lower the designated copy density is, the larger the value is.

If the specified addresses are converted by setting the value of Gain corresponding to the characteristics c1 shown in Fig. 7 to 1.1, the values of specified addresses obtained by the conversion Sadr corresponding to input gray level data 0 to (xL - 1) (see Figs. 7 and 8) become smaller than the minimum value 0 of the base addresses Oadr. Consequently, there exist no output gray level data corresponding to the input gray level data 0 to (xL - 1).

In such a case, it is considered that the specified addresses Sadr corresponding to the input gray level data 0 to (xL - 1) are set to the minimum value 0 of the base addresses Oadr. Consequently, output gray level data corresponding to the input gray level data 0 to (xL - 1) are the same as output gray level data corresponding to the input gray level data xL. The output gray level data corresponding to the input gray level data 0 to (xL - 1) are graphically indicated by a straight portion c10 in Fig. 7.

The output gray level data corresponding to the input gray level data which correspond to the specified addresses Sadr whose values are smaller than 0 (the input gray levels 0 to (xL - 1) in the above described example) can also be obtained as indicated by the graph line c2 in Fig. 8. Specifically, this graph line c2 is obtained by rotating the graph line a indicating the original input/output gray level characteristics through a predetermined angle in a counterclockwise direction around a Point, which corresponds to the highest output gray level, on the graph line $\underline{a}$ and indicating input gray level-output gray level characteristics corresponding to the input gray levels 0 to (xL - 1) by a straight portion c20 which is a straight line passing through a point. The line corresponds to the input gray level data xL, on a graph line obtained by rotation with $\theta$ = 45°.

Description is now made of the embodiment for the case where the designated copy density is higher than the reference copy density.

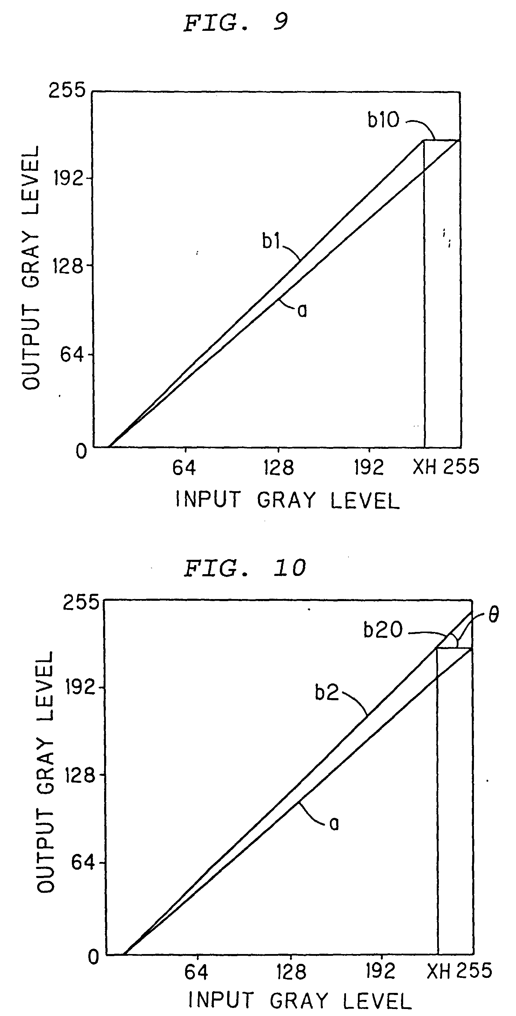

Figs. 9 and 10 show input/output gray level characteristics in a case where input gray levels are used to enter the axis of abscissa and output gray levels are used to enter the axis of ordinate. A graph line $a$ shown in Figs. 9 and 10 indicates the original input/output gray level characteristics. When the designated copy density is higher than the reference copy density, the original input gray level-output gray level characteristics are converted into characteristics obtained by rotating the graph line a indicating the original input gray level-output gray level characteristics through a predetermined angle in a counterclockwise direction around a point, which corresponds to the lowest output gray level, on the graph line a. as indicated by a graph line bl in Fig. 9. The angle of rotation is set to a value corresponding to the designated copy density. If the graph line $a$ indicating the original input gray level-output gray level characteristics is merely rotated in a counterclockwise direction, no input gray level-output gray level data exist in a portion at high input gray levels. Accordingly, input/output gray level data in the portion are indicated by a graph line c20 in Fig. 10 which is a straight line having a gradient $\theta$ of, for example, 45°. The input gray levels are thus converted on the basis of input gray level-output copy density gray level data c2 found.

Description is made of a case where the designated copy density is higher than the reference copy density using the idea of converting specified. addresses.

The characteristics bl obtained by rotating the graph line $a$ indicating the original input gray level-output gray level characteristics shown in Fig. 9 through a predetermined angle in a counterclockwise direction are obtained by converting base addresses Oadr corresponding to input gray level data by the expression:

$$Sadr = 255 - \{Gain (255 - Oadr) + Offset\} \tag{3}$$

Gain is so determined. if the designated copy density is higher than the reference copy density, that it takes a value larger than 1 and that the higher the designated copy density is, the larger the value is. On the other hand, Gain is so determined, if the designated copy density is lower than the reference copy density, that it takes a value smaller than 1 and that the lower the designated copy the density is, the smaller the value is. In this case, the value of Offset is so adjusted that the value of $\{255 \cdot Gain + Offset\}$ becomes 255.

If the specified addresses are converted using the values of Gain (> 1) and Offset corresponding to the characteristics bl shown in Fig. 9, the values of specified addresses obtained by the conversion Sadr corresponding to input gray level data (xH + 1) to 255 (see Figs. 9 and 10) become larger than the maximum value 255 of the base addresses Oadr. Consequently, there exist no output gray level data corresponding to the input gray level data (xH + 1) to 255.

In such a case, it is considered that the specified address Sadr corresponding to the input gray level data (xH + 1) to 255 are set to the maximum value 255 of the base addresses Oadr. Consequently, output gray level data corresponding to the input gray level data (xH + 1) to 255 are the same as output gray level data corresponding to the input gray level data xH. The output gray level data corresponding to the input gray level data (xH + 1) to 255 are graphically indicated by a straight portion b10 in Fig. 9.

The output gray level data corresponding to the input gray level data which correspond to the specified address Sadr whose values are larger than 255 (the input gray levels (xH + 1) to 255 in the above described example) can also be obtained as indicated by a graph line b20 in Fig. 18. Specifically, this graph line b20 is obtained by rotating the graph line $a$ indicating the original input/output gray level characteristics through a predetermined angle in a counterclockwise direction around a point, which corresponds to. the lowest output gray level, on the graph line $a$ input/output gray level characteristics corresponding to the input gray levels (xH + 1) to 255 are given by a straight portion b20 passing through a point, which corresponds to the input gray level data xH, on a graph line obtained by the rotation and having a gradient $\theta$ of 45°.

The present method therefore uses one procedure when the copy density designated in the operating section is higher than the reference copy density and another procedure when the copy density designated in the operating section is lower than the reference copy density.

Specifically, when the designated copy density is higher than the reference copy density, the original input/output gray level characteristics are indicated by the graph line $a$ in Fig. 10, and are converted into characteristics indicated by the graph line b2. On the other hand, when the designated copy density is lower than the reference copy density, the original input/output gray level characteristics are indicated by the graph line $a$ in Fig. 8, and are converted into characteristics indicated by the graph line c2.

## Claims

1. A density processing method in which input/output gray level data (RE) representing an output gray level relative to an input gray level are previously generated and stored in a first storing means (11), the input/output gray level data (RE) are transferred to a second storing means (13), and an address generating circuit (12) receives input gray level data and outputs address specifying signals to the second storing means (13), which address specifying signals accessing output gray level data to be outputted, characterized in that

the addresses specified by said specifying signals are computed in said address generating circuit (12) by making use of a one-to-one linear relationship between base addresses (Oadr) applied to said address generating circuit (12) and representing said input gray level data and said specified addresses (Sadr) representing said output gray level data, said linear relationship (c1, b1) being variable in accordance with the difference between the designated copy density and a reference copy density, and extending from a low input gray level value to a high input gray level value (0-255),

wherein, when the designated copy density is lower than the reference copy density, the linear relationship (c1) is determined, such that the amount of decrease in the output gray level, compared to that given by the stored input/output gray level data for the reference copy density, is higher in the low input gray level region of the relationship (c1) and the lower the designated copy density is, the greater the amount of decrease,

and wherein, when the designated copy density is higher than the reference copy density, the linear relationship (bl) is determined such that the amount of increase in the output gray level, compared to that given by the stored input/output gray level data for the reference copy density, is higher in the high input gray level region of the relationship (b1) and the higher the designated copy density is, the greater the amount of increase,

so that said output gray level data corresponding to the determined linear relationships (c1, b1) are accessed in said second storing means (13) by said address specifying signals computed in said address generating circuit (12).

## Patentansprüche

1. Dichteverarbeitungsverfahren, bei welchem Eingangsniveau-/Ausgangsniveaugraustufendaten (RE), die eine Ausgangsniveaugraustufe relativ zu einer Eingangsniveaugraustufe darstellen, im voraus erzeugt und in einer ersten Speichereinrichtung (11) gespeichert werden, die Eingangsniveau/Ausgangsniveaugraustufendaten (RE) zu einer zweiten Speichereinrichtung (13) übertragen werden; und eine Adressenerzeugungsschaltung (12) Eingangsniveaugraustufendaten empfängt und Signale zur Spezifikation von Adressen an die zweite Speichereinrichtung (13) ausgibt, wobei die Signale zur Spezifikation von Adressen den Zugriff auf Ausgangsniveaugraustufendaten erlauben, bevor sie ausgegeben werden, dadurch gekennzeichnet, daß

die von den Spezifikationssignalen spezifizierten Adressen in der Adressenerzeugungsschaltung (12) unter Verwendung einer linearen Eins-zu-eins-Beziehung zwischen Basisadressen (Oadr), die auf die Adressenerzeugungsschaltung (12) angewandt werden und die Eingangsniveaugraustufendaten darstellen, und den spezifizierten Adressen (Sadr), die die Ausgangsgraustufendaten darstellen, berechnet werden, wobei diese lineare Beziehung (cl, bl) als Funktion der Differenz zwischen der Dichte der bezeichneten Kopie und der Dichte einer Referenzkopie variabel ist und sich zwischen einem niedrigen Eingangsniveaugraustufenwert und einem hohen Eingangsniveaugraustufenwert (0 - 255) abstuft,

in welcher, wenn die Dichte der bezeichneten Kopie niedriger ist als die Dichte der Referenzkopie, die lineare Beziehung (c1) in der Weise bestimmt wird, daß das Ausmaß der Verminderung der Ausgangsniveaugraustufe verglichen mit derjenigen, die von den Eingangsniveau-/Ausgangsniveaugraustufendaten erzeugt worden ist, die für die Dichte der Referenzkopie gespeichert worden ist in dem Bereich eines niedrigen Niveaus der Eingangsgraustufe der Beziehung (c1) höher ist, und daß

das Ausmaß der Verminderung um so größer ist, je niedriger die Dichte der bezeichneten Kopie ist,

und in welcher, wenn die Dichte der bezeichneten Kopie höher ist als die Dichte der Referenzkopie, die lineare Beziehung (b1) in der Weise bestimmt wird, daß das Ausmaß der Zunahme des Niveaus der Ausgangsgraustufe verglichen mit derjenigen, die von den Eingangsniveau-/Ausgangsniveaugraustufendaten angegeben worden ist, die für die Dichte der Referenzkopie gespeichert worden ist in dem Bereich eines hohen Niveaus der Eingangsgraustufe der Beziehung (c1) höher ist, und daß das Ausmaß der Zunahme um so größer ist, je höher die Dichte der bezeichneten Kopie ist,

so daß die erzeugten Ausgangsniveaugraustufendaten, die den bestimmten linearen Beziehungen (c1, b1) entsprechen, in den zweiten Speichereinrichtungen (13) durch die Signale zur Spezifizierung von Adressen zugänglich sind, die in der Adressenerzeugungsschaltung (12) berechnet werden.

## Revendications

1. Procédé de traitement de la densité dans lequel des données de niveau d'entrée/sortie (RE) de gris représentant un niveau de sortie de gris par rapport à un niveau d'entrée de gris sont préalablement générées et stockées dans des premiers moyens de stockage (11), les données de niveau de gris d'entrée/sortie (RE) sont transférées à des deuxièmes moyens de stockage (13), et un circuit générateur d'adresses (12) reçoit des données de niveau d'entrée de gris et produit des signaux de spécification d'adresses aux deuxièmes moyens de stockage (13), lesquels signaux de spécification d'adresses permettent l'accès aux données de niveau de gris de sortie devant être extraits. caractérisé en ce que

les adresses spécifiées par les signaux de spécification sont calculées dans le circuit générateur d'adresses (12) en utilisant une relation linéaire un-à-un entre les adresses de base (Oadr) appliquées au circuit générateur d'adresses (12) et représentant les données de niveau de gris d'entrée et les adresses spécifiées (Sadr) représentant les données de niveau de gris de sortie, cette relation linéaire (c1,b1) étant variable en fonction des différences entre la densité de la copie désignée et la densité d'une copie de référence, s'étageant entre une valeur basse de niveau de gris d'entrée et une valeur haute de niveau de gris d'entrée (0-255),

dans lequel, quand la densité de la copie désignée est plus basse que la densité de la copie de référence, la relation linéaire (c1) est déterminée de telle sorte que l'ampleur de la décroissance dans le niveau de gris de sortie, comparée à celle produite par les données de niveau de gris d'entrée/sortie stockées pour la densité de la copie de référence, est plus haute dans la région de bas niveau de gris d'entrée de la relation (c1) et que, plus basse est la densité de la copie désignée, plus grande est l'ampleur de la décroissante,

et dans lequel, quand la densité de la copie désignée est plus haute que la densité de la copie de référence, la relation linéaire (b1) est déterminée de telle sorte que l'ampleur de la croissance dans le niveau de gris de sortie, comparée à celle donnée par les données de niveau de gris d'entrée/sortie stockées pour la densité de la copie de référence, est plus haute dans la région de haut niveau de gris d'entrée de la relation (b1) et que, plus grande est la densité de la copie désignée, plus grande est la croissance,

en sorte que les données de niveau de sortie de gris produites, correspondant aux relations linéaires déterminées (c1,b1), sont accessibles dans les deuxièmes moyens de stockage (13) par les signaux de spécification d'adresses calculés dans le circuit (12) de génération d'adresses.

## FIG. 1

ADDRESS GENERATING CIRCUIT — 12

TABLE MEMORY — 13

INPUT GRAY LEVEL DATA

ADDRESS SPECIFYING SIGNAL

OUTPUT GRAY LEVEL DATA

CPU — 10

DATA ROM — 11

RAM — 14

## FIG.2

| | |
|---|---|
| G0 | G1 |
| G2 | G3 |

## FIG.3

RE0

RE1

⋮

RE7

⋮

RE11

# FIG.4

| | |
|---|---|
| 0000 | |
| 0001 | |
| | TE0 |
| 0255 | |
| 0256 | |
| 0257 | |
| | TE1 |
| 0511 | |
| 0512 | |
| 0513 | |
| | TE2 |
| 0767 | |
| 0768 | |
| 0769 | |
| | TE3 |
| 1023 | |

# FIG.5

# F I G. 6

## FIG. 7

## FIG. 8

## FIG. 9

## FIG. 10

*FIG. 11*

*FIG. 12*